# EUROPEAN PATENT APPLICATION

(11) **EP 2 806 418 A1**
(43) Date of publication of application: **26.11.2014**
(21) Application number: 12865950.5
(22) Date of filing: 02.10.2012
(51) Int. Cl.: G09F 9/00, H04M 1/02, H05K 5/02

(54) **MOBILE TERMINAL DEVICE**

(30) Priority: 16.01.2012 JP 2012006587
(71) Applicant: NEC CASIO Mobile Communications, Ltd., Kawasaki-shi Kanagawa 211-8666 (JP)
(72) Inventor: SHIRAISHI, Mitsutaka, Kawasaki, Kanagawa 211-8566 (JP); KOMIYAMA, Takehiko, Kawasaki, Kanagawa 211-8566 (JP)
(74) Representative: Vossius & Partner
(86) International application number: PCT/JP2012/006315
(87) International publication number: WO 2013/108311

(57) **Abstract**

A portable terminal device 1 according to the present invention includes a frame component 40 to which a battery 20 and a substrate 30 are fixed, a housing 10 to which the frame component 40 is fixed, and a display section 50 fixed on a side of the housing 10 on which the frame component 40 is fixed. In the portable terminal device 1 according to the present invention, the housing 10 may contain carbon composite material. Further, the carbon composite material contained in the housing 10 may contain carbon fibers. According to the portable terminal device 1 in accordance with the present invention, a portable terminal device capable of achieving a reduction in the thickness and an improvement in the impact resistance of the portable terminal device is provided.

## Description

### Technical Field

The present invention relates to a portable terminal device, in particular, a portable terminal device using a thin planar housing.

### Background Art

In recent years, portable terminal devices such as mobile phones and smart phones have become widespread. In general, portable terminal devices are often carried around for use by users. Therefore, when a user accidentally drops a portable terminal device, for example, a strong impact is exerted on the portable terminal device.

Patent Literature 1 discloses a technique for a liquid crystal device capable of preventing deteriorations of the orientation property and the image quality of the liquid crystal panel even when a strong impact is exerted on the liquid crystal device. In the liquid crystal device disclosed in Patent Literature 1, a vibration impact resistance unit in which two impact absorbing spaces are disposed on both sided of a liquid crystal panel for preventing an impact exerted on a liquid crystal main body from transmitting to the liquid crystal panel is fixed to a fixing component. Then, by fixing this fixing component to which the vibration impact resistance unit is fixed to a first exterior component that forms the outer surface of the liquid crystal device main body, the vibration impact resistance unit is indirectly fixed to the first exterior component in order to prevent a strong impact exerted on the liquid crystal device main body from transmitted to the liquid crystal panel.

### Citation List

### Patent Literature

Patent Literature 1: Japanese Unexamined Patent Application Publication No. H10-90656

### Summary of Invention

### Technical Problem

In recent years, portable terminal devices such as mobile phones and smart phones are becoming thinner and thinner. However, there is a problem that as portable terminal devices become thinner, the strength of the portable terminal devices is lowered and hence the impact resistance is lowered.

In view of the above-described problem, an object of the present invention is to provide a portable terminal device capable of achieving a reduction in the thickness and an improvement in the impact resistance of the portable terminal device.

### Solution to Problem

A portable terminal device according to an aspect of the present invention includes: a frame component to which a substrate and a battery are fixed; a housing to which the frame component is fixed; and a display section fixed on a side of the housing on which the frame component is fixed.

### Advantageous Effects of Invention

According to the present invention, it is possible to provide a portable terminal device capable of achieving a reduction in the thickness and an improvement in the impact resistance of the portable terminal device.

### Brief Description of Drawings

Fig. 1 is an exploded perspective view showing an example of a portable terminal device according to a first exemplary embodiment;
Fig. 2 is an exploded perspective view showing an example of a display section of the portable terminal device according to the first exemplary embodiment;
Fig. 3 is a bottom view of the display section of the portable terminal device according to the first exemplary embodiment;
Fig. 4 is a cross section of the portable terminal device taken along a line IV-IV in Fig. 1;
Fig. 5 is an exploded perspective view showing an example of a battery provided in the portable terminal device according to the first exemplary embodiment;
Fig. 6 is a perspective view of the rear surface of the portable terminal device according to the first exemplary embodiment;
Fig. 7 is an exploded perspective view showing another example of a portable terminal device according to the first exemplary embodiment;
Fig. 8 is a cross section of the portable terminal device taken along a line VIII-VIII in Fig. 7;
Fig. 9 is an exploded perspective view showing an example of a portable terminal device according to a second exemplary embodiment;
Fig. 10 is an exploded perspective view showing an example of a display section of the portable terminal device according to the second exemplary embodiment;
Fig. 11 is a bottom view of the display section of the portable terminal device according to the second exemplary embodiment;
Fig. 12 is a cross section of the portable terminal device taken along a line XII-XII in Fig. 9;
Fig. 13 is an exploded perspective view showing an example of a battery provided in the portable terminal device according to the second exemplary embodiment;
Fig. 14 is a perspective view of the rear surface of the portable terminal device according to the second exemplary embodiment;
Fig. 15 is an exploded perspective view showing another example of a portable terminal device according to the second exemplary embodiment; and
Fig. 16 is a cross section of the portable terminal device taken along a line XVI-XVI in Fig. 15.

### Description of Embodiments

### <First exemplary embodiment>

Exemplary embodiments according to the present invention are explained hereinafter with reference to the drawings.

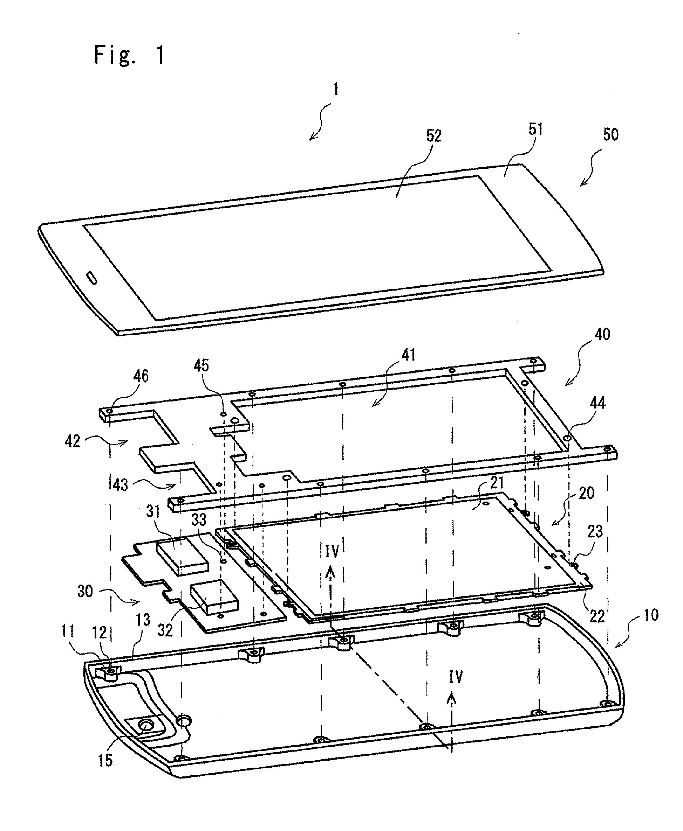

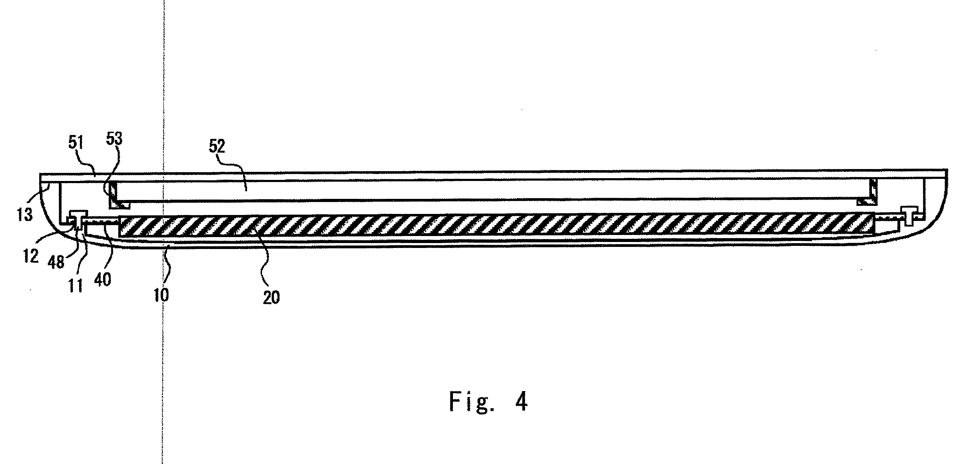

Fig. 1 is an exploded perspective view showing an example of a portable terminal device according to this exemplary embodiment. Fig. 4 is a cross section of the portable terminal device 1 taken along a line IV-IV in Fig. 1. In the portable terminal device 1 according to this exemplary embodiment, a battery 20, a substrate 30, and a frame component 40 are housed in a space that is formed by joining a housing 10 with a display section 50. The portable terminal device 1 according to this exemplary embodiment may be, for example, a smart phone, a tablet-type portable terminal device, a mobile phone, a game machine, an electronic book reader, or the like.

The battery 20 includes a battery main body 21 and a fixing component 22 for fixing the battery main body 21 to the frame component 40. The battery main body 21 is, for example, a lithium-ion secondary battery. The fixing component 22 is disposed on the periphery of the battery main body 21. In the fixing component 22, a plurality of attaching holes 23 for attaching the battery 20 to the frame component 40 by using screws or the like are formed in places corresponding to those of attaching holes 44 formed in the frame component 40. In the example shown in Fig. 1, two attaching holes 23 are formed at each end in the longitudinal direction of the battery 20.

The fixing component 22 may be any component capable of fixing the battery main body 21 to the frame component 40. For example, the fixing component 22 may be a component that is integrally formed so as to surround the periphery of the battery main body 21. Alternatively, the fixing component 22 may be composed of a plurality of components separately disposed in a plurality of places on the periphery of the battery main body 21. The fixing component 22 can be formed by using, for example, a resin. Further, the battery main body 21 and the fixing component 22 may be integrally formed. That is, the attaching holes 23 may be formed on the periphery of the battery main body 21 when the battery main body 21 itself is formed.

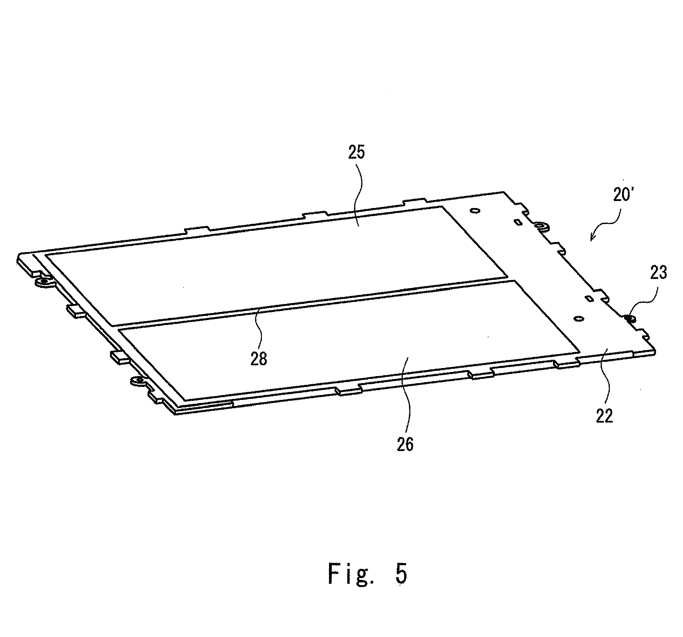

Note that the battery 20 may be formed by using a plurality of cells 25 and 26 as shown as a battery 20' in Fig. 5. Further, it is possible to improve the strength in the longitudinal direction of the battery by arranging the cells 25 and 26, each of which extends in the longitudinal direction of the housing 10, in a direction perpendicular to the longitudinal direction of the housing 10. That is, by arranging the cells 25 and 26 so that the border between them is oriented in the longitudinal direction of the housing 10, the strength in the longitudinal direction of the battery can be improved in comparison to when the cells 25 and 26 are arranged so that the border between them is oriented in the direction perpendicular to the longitudinal direction of the housing 10. Further, the strength in the longitudinal direction of the battery can be further improved by providing a beam 28 on the center of the fixing component 22 for fixing the battery main body (cells 25 and 26) to the frame component 40.

In general, it is very difficult to increase the size of a battery cell to a certain size or larger due to restrictions of the manufacturing technique and the like. Therefore, as shown as the battery 20', it is also very useful and advantageous in view of the manufacture of portable terminal devices to form a battery by using a plurality of cells each of which has a relatively small size, and to improve the strength in the longitudinal direction of the battery by arranging them as described above.

Circuit components 31 and 32 are disposed on the substrate 30. Note that examples of the circuit components 31 and 32 include an integrated circuit device such as a processor, a memory, and a communication module, and an image pickup device for a camera. Further, in the substrate 30, a plurality of attaching holes 33 for attaching the substrate 30 to the frame component 40 by using screws or the like are formed in places corresponding to those of attaching holes 45 formed in the frame component 40. In the example shown in Fig. 1, three attaching holes 33 for attaching the substrate 30 to the frame component 40 are formed.

The frame component 40 is a component for holding the battery 20 and the substrate 30. Since the frame component 40 needs to have a certain strength, the frame component 40 is preferably formed of metal material. Examples of the material for the frame component 40 include magnesium alloys, aluminum, and stainless steel. Note that to reduce the weight of the portable terminal device 1, the frame component 40 is preferably formed by using a magnesium alloy. Alternatively, the frame component 40 may be formed by using resin material, provided that the certain strength is ensured.

In the frame component 40, an opening 41 is formed in a place corresponding to the place where the battery 20 is attached. That is, the frame component 40 includes an opening (first opening) 41 in a place that is opposed to the top surface (first surface) of the battery 20. By forming the opening 41 as described above, a part of the battery 40 can be disposed inside the frame component 40 and hence the space inside the housing can be effectively used as shown in a cross section shown in Fig. 4. Note that the battery 20 may be fixed so that the top surface of the battery 20 protrudes beyond the top surface of the frame component 40. Alternatively, the battery 20 may be fixed so that the top surface of the battery 20 is flush with the top surface of the frame component 40. When the top surface of the battery 20 is made flush with that of the frame component 40, the interference between the display section 50 (i.e., a touch panel 51 and a display panel 52) and the battery 20 is lowered, thus enabling the portable terminal device to be reduced in thickness even further. Further, when the top surface of the battery 20 is made flush with that of the frame component 40 and the display section 50 (i.e., the touch panel 51 and the display panel 52) is brought into close contact with this flush surface, the thickness of the portable terminal device can be further reduced and the overall strength of the portable terminal device can be improved.

Further, in the frame component 40, a plurality of attaching holes 44 for attaching the battery 20 to the frame component 40 by using screws or the like are formed in places corresponding to those of the attaching holes 23 formed in the battery 20. In the example shown in Fig. 1, four attaching holes 44 for attaching the battery 20 to the frame component 40 are formed. For example, the battery 40 is fixed to the frame component 40 from the side of the frame component 40 on which the housing 10 is disposed by using screws or the like.

The frame component 40 includes openings (second openings) 42 and 43 in places corresponding to those of the circuit component 31 and 32 disposed on the substrate 30. By forming the openings 42 and 43 as described above, it is possible to suppress the interference between the frame component 40 and the circuit component 31 and 32 disposed on the substrate 30 even when the circuit component 31 and 32 has a large height.

Further, in the frame component 40, a plurality of attaching holes 45 for attaching the substrate 30 to the frame component 40 by using screws or the like are formed in places corresponding to those of the attaching holes 33 formed in the substrate 30. In the example shown in Fig. 1, three attaching holes 45 for attaching the substrate 30 to the frame component 40 are formed. For example, the substrate 30 is fixed to the frame component 40 from the side of the frame component 40 on which the housing 10 is disposed by using screws or the like.

Further, in the frame component 40, a plurality of attaching holes 46 for attaching the frame component 40 to the housing 10 by using screws or the like are formed in places corresponding to those of fixing parts 11 of the housing 10. In the example shown in Fig. 1, ten attaching holes 46 are formed on the peripheral part of the frame component 40.

The housing 10 is configured so that the housing 10 can house the battery 20, the substrate 30, and the frame component 40 inside thereof. Further, a hole 15 for a camera is formed in the housing 10. A plurality of fixing parts 11 for fixing the frame component 40 are formed on the inner wall of the housing 10. The fixing parts 11 are disposed in places corresponding to the fixing places (attaching holes 46) of the frame component 40 in such a manner that the fixing parts 11 protrude inward from the peripheral part of the housing 10. An attaching hole 12 is formed in each of the fixing parts 11. In the example shown in Fig. 1, ten fixing parts 11 are formed in the housing 10. Further, a fixing surface 13 for fixing the display section 50 is formed in the peripheral part of the housing 10.

As shown in the cross section shown in Fig. 4, the fixing parts 11 are formed in places that are located on the inner side of the peripheral part of the housing 10 and at a height lower than that of the fixing surface 13. The frame component 40 is supported on the top surfaces of the fixing parts 11 of the housing 10 and fixed to the fixing parts 11 from the display section 50 side by using screws 48. Further, the display section 50 is fixed on the fixing surface 13 of the housing 10. For example, the display section 50 can be fixed on the fixing surface 13 of the housing 10 by using an adhesive. By disposing the fixing parts 11 at a height lower than that of the fixing surface 13 as described above, the attaching position of the frame component 40 can be located away from the display section 50. Therefore, impacts that transmit from the battery to the display section 50 when the portable terminal device is dropped, for example, can be reduced.

The housing 10 is formed of material containing carbon composite material (CFRP: Carbon fibers Reinforced Plastics). The carbon composite material is composite material containing carbon in 50% (v/v) or greater, and containing an inorganic binder such as silica and alumina, fibers, and so on. The carbon composite material has both a high strength and a light weight. Further, the carbon composite material has a thermal conductivity higher than that of resin material (plastic material).

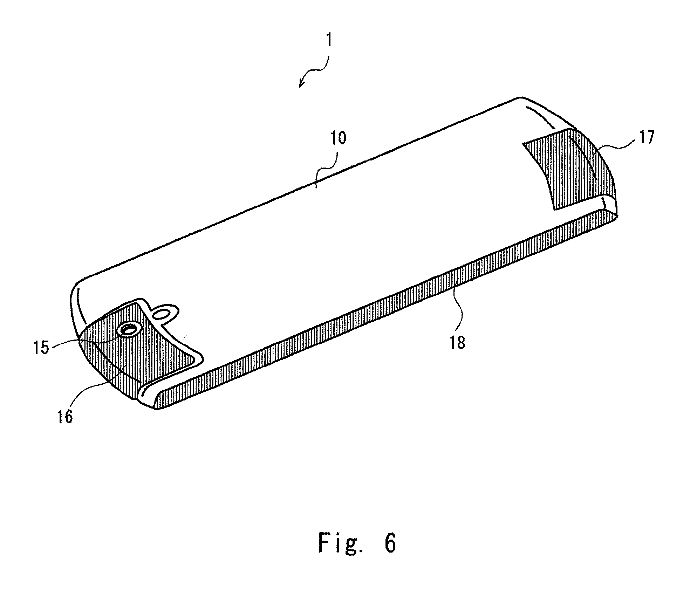

The housing 10 of the portable terminal device according to this exemplary embodiment includes a part(s) that is formed by using carbon composite material and a part(s) that is formed by using resin material. For example, the rear surface of the housing 10 may be formed of carbon composite material and the periphery (a part(s) having a curvature) of the housing 10 may be formed of resin material (see a periphery 18 in Fig. 6). By forming the part(s) having a curvature by using resin material as described above, the manufacturing of the housing 10 becomes easier. The housing 10 made of carbon composite material and resin material can be formed by, for example, placing carbon composite material in a predetermined part(s) of a die for the housing 10 and then performing injection molding.

Further, the carbon composite material contains carbon fibers. The carbon fibers have such properties that the thermal conductivity is high and the strength is large along the direction of the carbon fibers. Therefore, it is possible to diffuse the heat generated in the battery 20 and the substrate 30 in the longitudinal direction of the housing 10 by disposing the carbon fibers of the rear surface of the housing 10 along the longitudinal direction of the housing 10. That is, by diffusing the heat in the longitudinal direction along which the area of the rear surface is large, the heat radiation effect can be improved. Further, it is possible to make the temperature of the housing 10 uniform. Further, when the portable terminal device is dropped, a large impact is exerted in the longitudinal direction of the portable terminal device. By arranging carbon fibers in the longitudinal direction of the housing 10, the strength in the longitudinal direction of the housing 10 can be improved, thus improving the resistance to impacts that would be exerted when the portable terminal device is dropped.

Further, carbon fibers may be disposed in a direction intersecting (typically perpendicular to) the longitudinal direction of the housing 10. Note that because of the above-described reason, it is preferable that the amount of carbon fibers disposed in the longitudinal direction of the housing 10 is made larger than that of carbon fibers disposed in the direction intersecting the longitudinal direction of the housing 10. Note that the amount of carbon fibers disposed in the longitudinal direction of the housing 10 and that of the carbon fibers disposed in the direction intersecting the longitudinal direction of the housing 10 can be changed as appropriate according to the desired thermal diffusion and the desired strength of the housing 10.

When the housing 10 is formed by using carbon composite material containing carbon fibers, a carbon fiber layer(s) in which carbon fibers are disposed in the longitudinal direction of the housing 10 and another carbon fiber layer(s) in which carbon fibers are disposed in a direction intersecting the longitudinal direction of the housing 10 may be stacked on top of each other. In this case, it is possible to improve the thermal diffusion on the outer side of the housing 10 which comes into contact with a user's hand by disposing the carbon fibers of the carbon fiber layer disposed on the outermost side (side which comes into contact with a user's hand) among the plurality of carbon fiber layers of the housing 10 in the longitudinal direction of the housing 10. As a result, it is possible to make a user less likely to feel the heat when the user holds the portable terminal device with his/her hand.

Further, the carbon fibers of the carbon fiber layer disposed on the innermost side among the plurality of carbon fiber layers of the housing 10 may be disposed in the longitudinal direction of the housing 10. When carbon fibers layers are stacked, the thermal conductivity of the carbon fibers in the direction of the fibers is about 20 times to 30 times that in the stacking direction of the carbon fibers layers. Therefore, by arranging the carbon fibers layers as described above, it is possible to diffuse the heat generated from the battery 20 and the substrate 30 disposed inside the housing 10 in the longitudinal direction of the housing 10 before the heat diffuses to the outside of the housing 10.

Further, since carbon composite material contains conductive material, it has a radio wave shielding property. Therefore, it is preferable that insulating material such as resin material is used instead of the carbon composite material in a part(s) of the housing 10 where an antenna is disposed. Fig. 6 is a perspective view of the rear surface of the portable terminal device 1 according to this exemplary embodiment. As shown in Fig. 6, by forming parts 16 and 17 of the housing 10 where an antenna(s) is disposed by using insulating material such as resin material, it is possible to prevent radio waves, which should be received by the antenna(s), from being blocked.

Further, it is possible to form spaces at the ends in the longitudinal direction of the housing 10 by disposing antennas at the ends in the longitudinal direction of the housing (on the both sides in the longitudinal direction in the case of Fig. 6) and thereby to absorb impacts exerted at the longitudinal ends of the housing. Further, it is possible to improve the impact absorption at the longitudinal ends by forming the longitudinal ends by using resin material softer than the carbon composite material. In particular, by forming the longitudinal ends of the portable terminal device by using resin material and forming the longitudinal ends so that they have a curvature, it is possible to make the resin material absorb an impact that the portable terminal device receives when the portable terminal device is dropped. Note that the apex of the curved part is the part that is likely to collide with the floor or the like. Therefore, the housing is preferably formed by using resin material so that the part(s) made of the resin material includes the apex of the curved part.

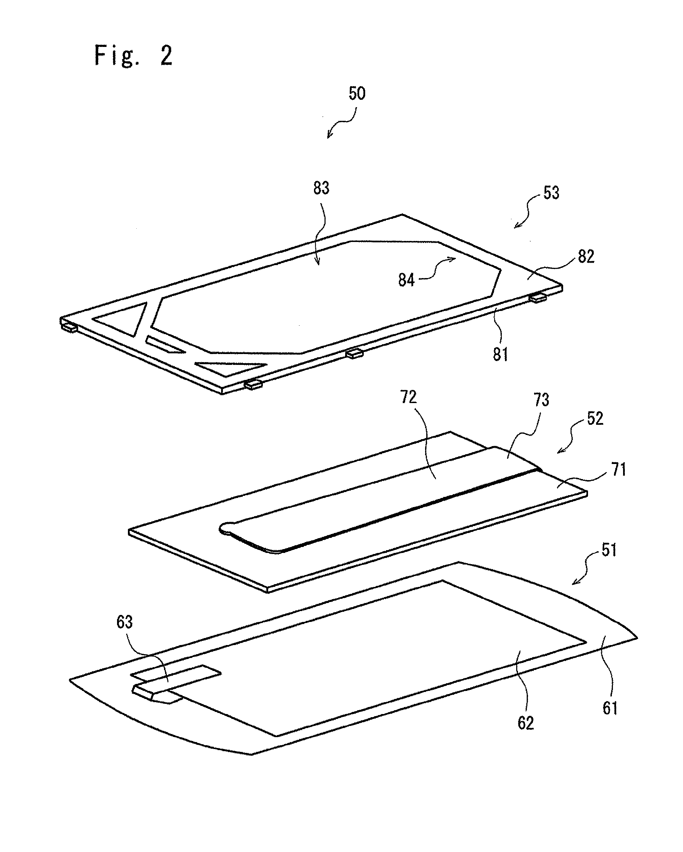

The display section 50 is attached on the fixing surface 13 of the housing 10. Fig. 2 is an exploded perspective view showing an example of the display section 50 of the portable terminal device 1 according to this exemplary embodiment. As shown in Fig. 2, the display section 50 includes a display panel 52, a bezel 53 formed so as to surround the periphery of the display panel 52, and a touch panel 51 disposed on the front surface side of the display panel 52. Alternatively, a panel that is formed of glass or plastic and has no touch panel function may be disposed in place of the touch panel 51 on the front surface side of the display panel 52.

The touch panel 51 includes a panel 61, an electrode part 62 disposed on the surface of the panel 61, and wiring 63. In the touch panel 51, a detection signal for detecting a position where a user's finger touch by using a capacitance is very weak. Therefore, the leading part of the wiring 63 of the touch panel 51 is preferably disposed so as to overlap the substrate 30 in a direction perpendicular to the main surface (front surface) of the touch panel 51. By arranging the touch panel 51 and the substrate 30 as described above, it is possible to reduce the length of the wiring 63 of the touch panel 51 and thereby to prevent noises from mixing into the detection signal.

The display panel 52 is, for example, a liquid crystal panel, an organic EL (Electro Luminescence) panel, or the like. A flexible cable 72 for supplying an image signal and so on to a display panel main body 71 is connected to an end 73 of the display panel main body 71. The display panel main body 71 is held by the bezel 53.

The bezel 53 includes a side wall 81 covering the side of the display panel main body 71, and a bottom surface 82 coveting a part of the rear surface of the display panel main body 71. An opening 83 is formed in a part of the bottom surface of the bezel 53 in order to reduce the weight. By providing the bezel 53, it is possible to increase the rigidity of the display panel main body 71 and thus to prevent the display panel main body 71 from deforming. That is, the bezel 53 is provided in order to prevent, when the size of the display panel main body 71 is large, the display panel main body 71 from warping by its own weight. For example, when the size of the display panel main body 71 is about four inches, the warping of the display panel main body 71 by its own weight is small. However, when the size of the display panel main body 71 is seven inches or larger, the warping of the display panel main body 71 by its own weight is large, thus making the bezel 53 indispensable. Further, in order to ensure the strength of the bezel 53, corners of the bezel 53 are left uncut.

The bezel 53 needs to have a certain strength. Therefore, the bezel 53 is preferably formed by using metal material such as stainless steel. Further, the bezel 53 is formed in such a manner that the thickness of a part 84 corresponding to the part (end 73) of the display panel main body 71 to which the flexible cable 72 is connected is small. In this manner, it is possible to prevent the bezel 53 from interfering with the flexible cable 72 and thereby to reduce the overall thickness of the display panel 52 and the bezel 53.

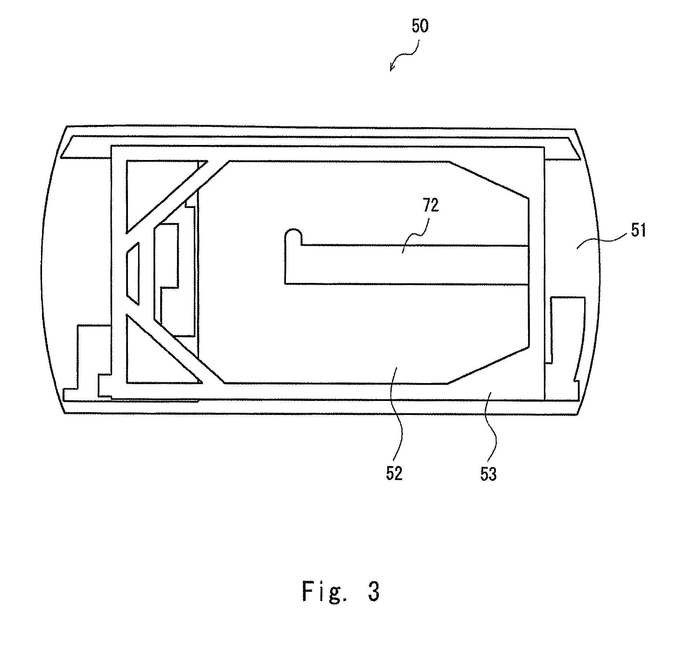

Fig. 3 is a bottom view of the display section 50 of the portable terminal device 1 according to this exemplary embodiment. As shown in Fig. 3, the display panel 52 and the bezel 53 holding the display panel 52 are disposed inside the touch panel 51. As shown above, since a space is formed between the peripheral part of the touch panel 51 and the display panel 52, the display panel 52 can be protected from external impacts. The size of the touch panel 51 corresponds to the size of the housing 10, and the peripheral part of the touch panel 51 is fixed on the fixing surface 13 formed in the peripheral part of the housing 10.

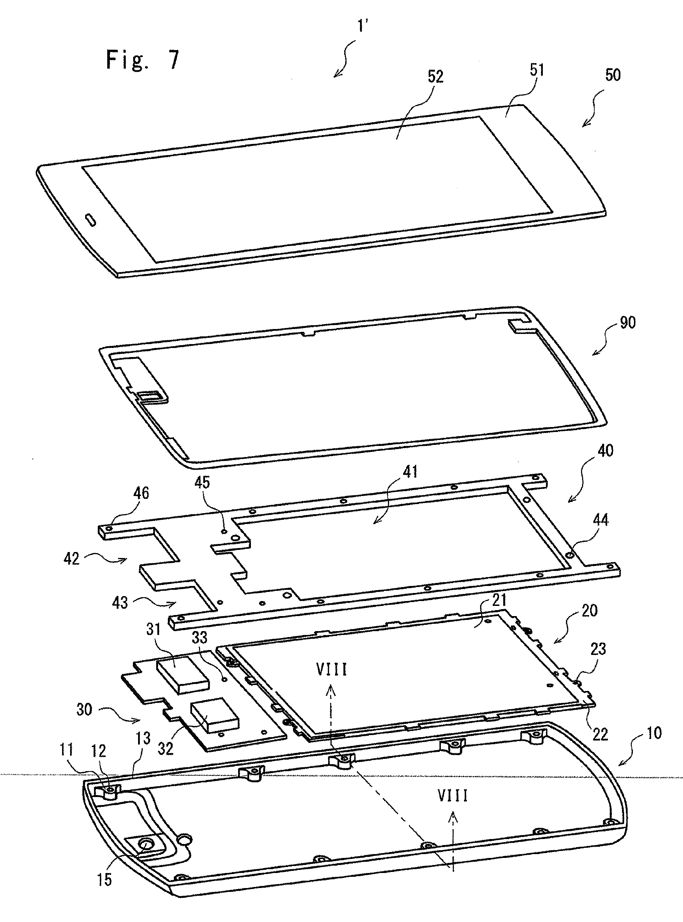

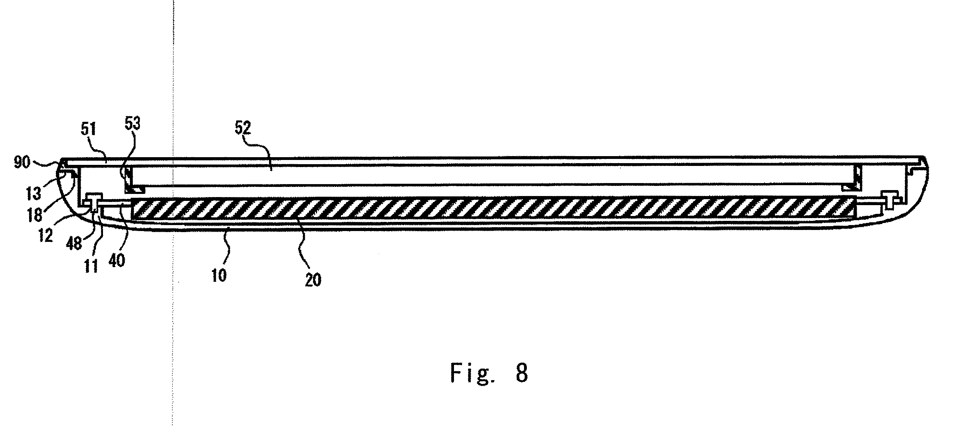

Fig. 7 is an exploded perspective view showing another example of a portable terminal device according to this exemplary embodiment. Fig. 8 is a cross section of the portable terminal device taken along a line VIII-VIII in Fig. 7. In the portable terminal device 1' according to the another example of this exemplary embodiment, a spacer 90 is provided between the fixing surface 13 of the housing 10 and the touch panel 51 for the fixing of the display section 50 to the housing 10. As shown in the exploded perspective view in Fig. 7, the spacer 90 is disposed so as to cover the fixing surface 13 of the housing 10. Note that as shown in the cross section in Fig. 8, the spacer 90 covers the peripheral side surface of the touch panel 51. Further, a step 18 is formed on the fixing surface 13 of the housing 10, so that the touch panel 51 can be prevented from getting misaligned from the housing 10 even when a stress in an in-plane direction is exerted on the touch panel 51. Further, by disposing the spacer 90, the alignment process of the touch panel 51 with the fixing surface 13 of the housing 10 can be easily performed when the touch panel 51 is fixed on the fixing surface 13.

As explained above, the portable terminal device according to this exemplary embodiment includes at least the frame component 40 to which the battery 20 and the substrate 30 are fixed, the housing 10 which contains carbon composite material and to which the frame component 40 is fixed, and the display section 50 fixed on the side of the housing 10 on which the frame component 40 is fixed.

Note that the housing 10 contains carbon composite material that has a strength stronger than that of resin. Further, the frame component 40, to which the battery 20 and the substrate 30 are fixed, is fixed to the housing 10. Therefore, it is possible to suppress the plastic deformation of the frame component 40 owing to the restoring force of the housing 10 having a large strength. Further, the rigidity of the portable terminal device can be ensured owing to the part(s) where the housing 10 and the frame component 40 are joined together. Therefore, it is possible to maintain the strength of the portable terminal device even when the thickness of the housing 10 is reduced. Further, since the battery 20 and the substrate 30 are attached to the housing 10 with the frame component 40 interposed therebetween, impacts that transmit from the housing 10 to the battery 20 and the substrate 30 when the portable terminal device is dropped can be reduced. More specifically, impacts that are exerted on the housing 10 when the portable terminal device is dropped do not directly transmit to the battery 20 and the substrate 30. Instead, the impacts transmit from the housing 10 to the frame component 40 and then from the frame component 40 to the battery 20 and the substrate 30. Therefore, the impacts that transmit to the battery 20 and the substrate 30 can be reduced.

Further, in the portable terminal device according to this exemplary embodiment, as shown in cross sections in Figs. 4 and 8, the display section 50 is fixed on the fixing surface 13 of the housing 10 and the frame component 40 is fixed to the fixing parts 11 of the housing 10. That is, the display section 50 and the frame component 40 are independently fixed to different places of the housing 10. Therefore, it is possible to form a space(s) between the periphery of the bezel 53 and the frame component 40 (see Figs. 4 and 8) and thereby to reduce impacts that transmit from the battery 20, the substrate 30, and the frame component 40 to the display section 50 when the portable terminal device is dropped.

Accordingly, the invention according to this exemplary embodiment can provide a portable terminal device capable of achieving a reduction in the thickness and an improvement in the impact resistance of the portable terminal device.

### <Second exemplary embodiment>

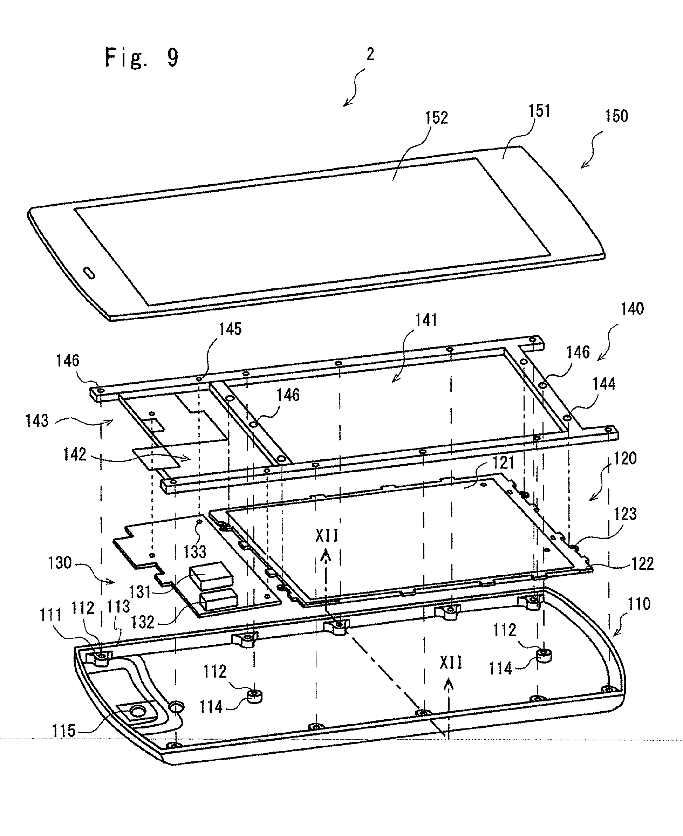

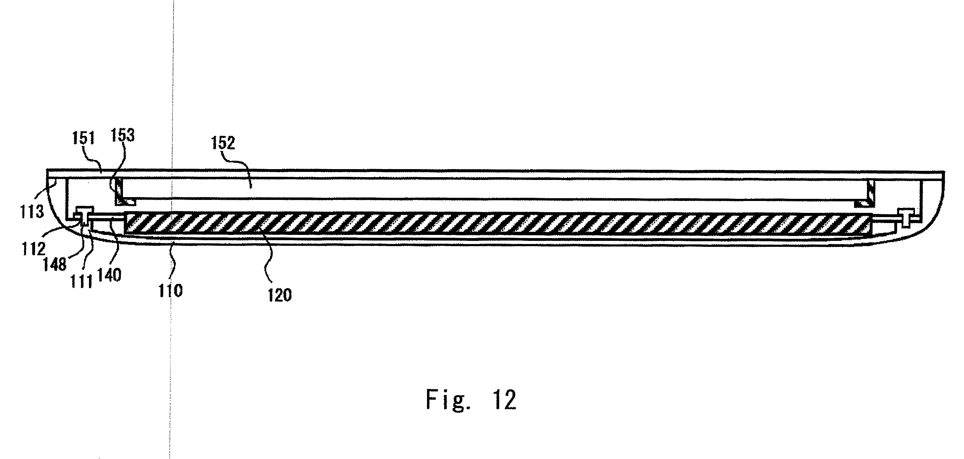

Fig. 9 is an exploded perspective view showing an example of a portable terminal device according to a second exemplary embodiment. Fig. 12 is a cross section of the portable terminal device 2 taken along a line XII-XII in Fig. 9. In the portable terminal device 2 according to this exemplary embodiment, a battery 120, a substrate 130, and a frame component 140 are housed in a space that is formed by joining a housing 110 with a display section 150. The portable terminal device 2 according to this exemplary embodiment may be a smart phone, a tablet portable terminal device, a mobile phone, a game machine, an electronic book terminal, or the like.

The battery 120 includes a battery main body 121 and a fixing component 122 for fixing the battery main body 121 to the frame component 140. The battery main body 121 is, for example, a lithium-ion secondary battery. The fixing component 122 is disposed on the periphery of the battery main body 121. In the fixing component 122, a plurality of attaching holes 123 for attaching the battery 120 to the frame component 140 by using screws or the like are formed in places corresponding to those of attaching holes 144 formed in the frame component 140. In the example shown in Fig. 9, two attaching holes 123 are formed at each end in the longitudinal direction of the battery 120.

The fixing component 122 may be any component capable of fixing the battery main body 121 to the frame component 140. For example, the fixing component 122 may be a component that is integrally formed so as to surround the periphery of the battery main body 121. Alternatively, the fixing component 122 may be composed of a plurality of components separately disposed in a plurality of places on the periphery of the battery main body 121. The fixing component 122 can be formed by using, for example, a resin. Further, the battery main body 121 and the fixing component 122 may be integrally formed. That is, the attaching holes 123 may be formed on the periphery of the battery main body 121 when the battery main body 121 itself is formed.

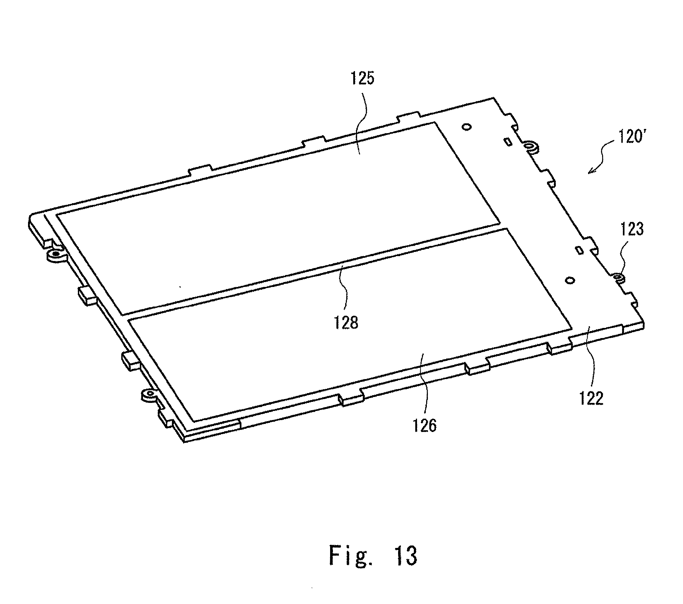

Note that the battery 120 may be formed by using a plurality of cells 125 and 126 as shown as a battery 120' in Fig. 13. Further, it is possible to improve the strength in the longitudinal direction of the battery by arranging the cells 125 and 126, each of which extends in the longitudinal direction of the housing 10, in a direction perpendicular to the longitudinal direction of the housing 110. That is, by arranging the cells 125 and 126 so that the border between them is oriented in the longitudinal direction of the housing 110, the strength in the longitudinal direction of the battery can be improved in comparison to when the cells 125 and 126 are arranged so that the border between them is oriented in the direction perpendicular to the longitudinal direction of the housing 110. Further, the strength in the longitudinal direction of the battery can be further improved by providing a beam 128 on the center of the fixing component 122 for fixing the battery main body (cells 125 and 126) to the frame component 140.

In general, it is very difficult to increase the size of a battery cell to a certain size or larger due to restrictions of the manufacturing technique and the like. Therefore, as shown as the battery 120', it is also very useful and advantageous in view of the manufacture of portable terminal devices to form a battery by using a plurality of cells each of which has a relatively small size, and to improve the strength in the longitudinal direction of the battery by arranging them as described above.

Circuit components 131 and 132 are disposed on the substrate 130. Note that examples of the circuit components 131 and 132 include an integrated circuit device such as a processor, a memory, and a communication module, and an image pickup device for a camera. Further, in the substrate 130, a plurality of attaching holes 133 for attaching the substrate 130 to the frame component 140 by using screws or the like are formed in places corresponding to those of attaching holes 145 formed in the frame component 140. In the example shown in Fig. 9, three attaching holes 133 for attaching the substrate 130 to the frame component 140 are formed.

The frame component 140 is a component for holding the battery 120 and the substrate 130. Since the frame component 140 needs to have a certain strength, the frame component 140 is preferably formed of metal material. Examples of the material for the frame component 140 include magnesium alloys, aluminum, and stainless steel. Note that to reduce the weight of the portable terminal device 2, the frame component 140 is preferably formed by using a magnesium alloy. Alternatively, the frame component 140 may be formed by using resin material, provided that the certain strength is ensured.

In the frame component 140, an opening 141 is formed in a place corresponding to the place where the battery 120 is attached. That is, the frame component 140 includes an opening (first opening) 141 in a place that is opposed to the top surface (first surface) of the battery 120. By forming the opening 141 as described above, a part of the battery 140 can be disposed inside the frame component 140 and hence the space inside the housing can be effectively used as shown in a cross section shown in Fig. 12. Note that the battery 120 may be fixed so that the top surface of the battery 120 protrudes beyond the top surface of the frame component 140. Alternatively, the battery 120 may be fixed so that the top surface of the battery 120 is flush with the top surface of the frame component 140 When the top surface of the battery 120 is made flush with that of the frame component 140, the interference between the display section 150 (i.e., a touch panel 151 and a display panel 152) and the battery 120 is lowered, thus enabling the portable terminal device to be reduced in thickness even further. Further, when the top surface of the battery 120 is made flush with that of the frame component 140 and the display section 150 (i.e., the touch panel 151 and the display panel 152) is brought into close contact with this flush surface, the thickness of the portable terminal device can be further reduced and the overall strength of the portable terminal device can be improved.

Further, in the frame component 140, a plurality of attaching holes 144 for attaching the battery 120 to the frame component 140 by using screws or the like are formed in places corresponding to those of the attaching holes 123 formed in the battery 120. In the example shown in Fig. 9, four attaching holes 144 for attaching the battery 120 to the frame component 140 are formed. For example, the battery 140 is fixed to the frame component 140 from the side of the frame component 140 on which the housing 110 is disposed by using screws or the like.

The frame component 140 includes openings (second openings) 142 and 143 in places corresponding to those of the circuit component 131 and 132 disposed on the substrate 130. By forming the openings 142 and 143 as described above, it is possible to suppress the interference between the frame component 140 and the circuit component 131 and 132 disposed on the substrate 130 even when the circuit component 131 and 132 has a large height.

Further, in the frame component 140, a plurality of attaching holes 145 for attaching the substrate 130 to the frame component 140 by using screws or the like are formed in places corresponding to those of the attaching holes 133 formed in the substrate 130. In the example shown in Fig. 9, three attaching holes 145 for attaching the substrate 130 to the frame component 140 are formed. For example, the substrate 130 is fixed to the frame component 140 from the side of the frame component 140 on which the housing 110 is disposed by using screws or the like.

Further, in the frame component 140, a plurality of attaching holes 146 for attaching the frame component 140 to the housing 110 by using screws or the like are formed in places corresponding to those of fixing parts 111 of the housing 110. In the example shown in Fig. 9, 12 attaching holes 146 are formed in total in the frame component 140.

The housing 110 is configured so that the housing 110 can house the battery 120, the substrate 130, and the frame component 140 inside thereof. Further, a hole 115 for a camera is formed in the housing 110. A plurality of fixing parts 111 for fixing the frame component 140 are formed on the inner wall of the housing 110. The fixing parts 111 are disposed in places corresponding to the fixing places (attaching holes 146) of the frame component 140 in such a manner that the fixing parts 111 protrude inward beyond the peripheral part of the housing 110. Further, fixing parts 114 for fixing the frame component 140 are formed inside the housing 110. An attaching hole 112 is formed in each of the fixing parts 111 and 114. In the example shown in Fig. 9, 12 fixing parts 111 and 114 are formed in the housing 110. Further, a fixing surface 113 for fixing the display section 150 is formed in the peripheral part of the housing 110.

As shown in the cross section shown in Fig. 12, the fixing parts 111 are formed in places that are located on the inner side of the peripheral part of the housing 110 and at a height lower than that of the fixing surface 113. The frame component 140 is supported on the top surfaces of the fixing parts 111 of the housing 110 and fixed to the fixing parts 111 from the display section 150 side by using screws 148. Further, the display section 150 is fixed on the fixing surface 113 of the housing 110. For example, the display section 150 can be fixed on the fixing surface 113 of the housing 110 by using an adhesive. By disposing the fixing parts 111 at a height lower than that of the fixing surface 113 as described above, the attaching position of the frame component 140 can be located away from the display section 150. Therefore, impacts that transmit from the battery to the display section 150 when the portable terminal device is dropped, for example, can be reduced.

The housing 110 is formed of material containing carbon composite material (CFRP: Carbon fibers Reinforced Plastics). The carbon composite material is composite material containing carbon in 50% (v/v) or greater, and containing an inorganic binder such as silica and alumina, fibers, and so on. The carbon composite material has both a high strength and a light weight. Further, the carbon composite material has a thermal conductivity higher than that of resin material (plastic material).

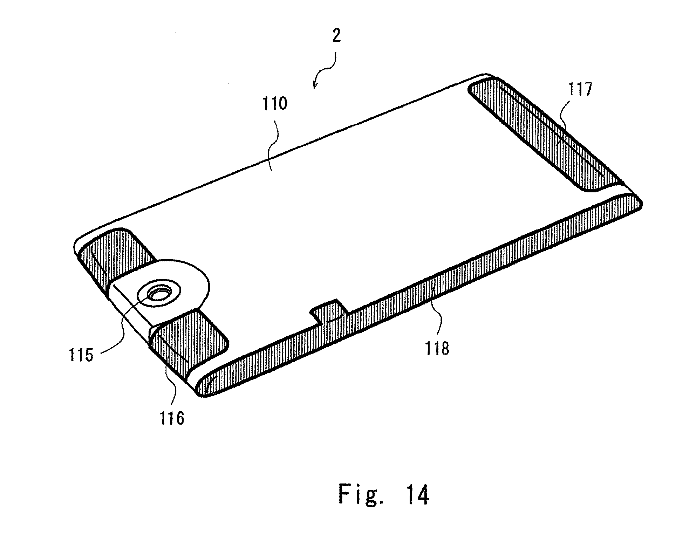

The housing 110 of the portable terminal device according to this exemplary embodiment includes a part(s) that is formed by using carbon composite material and a part(s) that is formed by using resin material. For example, the rear surface of the housing 110 may be formed of carbon composite material and the periphery (a part(s) having a curvature) of the housing 110 may be formed of resin material (see a periphery 118 in Fig. 14). By forming the part(s) having a curvature by using resin material as described above, the manufacturing of the housing 110 becomes easier. The housing 110 made of carbon composite material and resin material can be formed by, for example, placing carbon composite material in a predetermined part(s) of a die for the housing 110 and then performing injection molding.

Further, the carbon composite material contains carbon fibers. The carbon fibers have such properties that the thermal conductivity is high and the strength is large along the direction of the carbon fibers. Therefore, it is possible to diffuse the heat generated in the battery 120 and the substrate 130 in the longitudinal direction of the housing 110 by disposing the carbon fibers of the rear surface of the housing 110 along the longitudinal direction of the housing 110. That is, by diffusing the heat in the longitudinal direction along which the area of the rear surface is large, the heat radiation effect can be improved. Further, it is possible to make the temperature of the housing 110 uniform. Further, when the portable terminal device is dropped, a large impact is exerted in the longitudinal direction of the portable terminal device. By arranging carbon fibers in the longitudinal direction of the housing 110, the strength in the longitudinal direction of the housing 110 can be improved, thus improving the resistance to impacts that would be exerted when the portable terminal device is dropped.

Further, carbon fibers may be disposed in a direction intersecting (typically perpendicular to) the longitudinal direction of the housing 110. Note that because of the above-described reason, it is preferable that the amount of carbon fibers disposed in the longitudinal direction of the housing 110 is made larger than that of carbon fibers disposed in the direction intersecting the longitudinal direction of the housing 110. Note that the amount of carbon fibers disposed in the longitudinal direction of the housing 110 and that of the carbon fibers disposed in the direction intersecting the longitudinal direction of the housing 110 can be changed as appropriate according to the desired thermal diffusion and the desired strength of the housing 110.

When the housing 110 is formed by using carbon composite material containing carbon fibers, a carbon fiber layer(s) in which carbon fibers are disposed in the longitudinal direction of the housing 110 and another carbon fiber layer(s) in which carbon fibers are disposed in a direction intersecting the longitudinal direction of the housing 110 may be stacked on top of each other. In this case, it is possible to improve the thermal diffusion on the outer side of the housing 110 which comes into contact with a user's hand by disposing the carbon fibers of the carbon fiber layer disposed on the outermost side (side which comes into contact with a user's hand) among the plurality of carbon fiber layers of the housing 110 in the longitudinal direction of the housing 110. As a result, it is possible to make a user less likely to feel the heat when the user holds the portable terminal device with his/her hand.

Further, the carbon fibers of the carbon fiber layer disposed on the innermost side among the plurality of carbon fiber layers of the housing 110 may be disposed in the longitudinal direction of the housing 110. When carbon fibers layers are stacked, the thermal conductivity of the carbon fibers in the direction of the fibers is about 20 times to 30 times that in the stacking direction of the carbon fibers layers. Therefore, by arranging the carbon fibers layers as described above, it is possible to diffuse the heat generated from the battery 120 and the substrate 130 disposed inside the housing 10 in the longitudinal direction of the housing 110 before the heat diffuses to the outside of the housing 110.

Further, since carbon composite material contains conductive material, it has a radio wave shielding property. Therefore, it is preferable that insulating material such as resin material is used instead of the carbon composite material in a part(s) of the housing 110 where an antenna is disposed. Fig. 14 is a perspective view of the rear surface of the portable terminal device 2 according to this exemplary embodiment. As shown in Fig. 14, by forming parts 116 and 117 of the housing 110 where an antenna(s) is disposed by using insulating material such as resin material, it is possible to prevent radio waves, which should be received by the antenna(s), from being blocked.

Further, it is possible to form spaces at the ends in the longitudinal direction of the housing 110 by disposing antennas at the ends in the longitudinal direction of the housing (on the both sides in the longitudinal direction in the case of Fig. 14) and thereby to absorb impacts exerted at the longitudinal ends of the housing. Further, it is possible to improve the impact absorption at the longitudinal ends by forming the longitudinal ends by using resin material softer than the carbon composite material. In particular, by forming the longitudinal ends of the portable terminal device by using resin material and forming the longitudinal ends so that they have a curvature, it is possible to make the resin material absorb an impact that the portable terminal device receives when the portable terminal device is dropped. Note that the apex of the curved part is the part that is likely to collide with the floor or the like. Therefore, the housing is preferably formed by using resin material so that the part(s) made of the resin material includes the apex of the curved part.

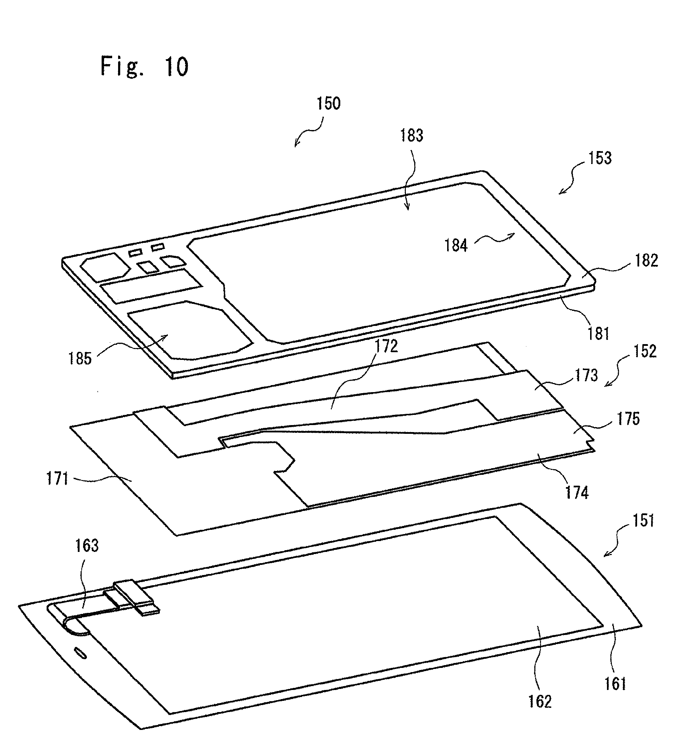

The display section 150 is attached on the fixing surface 113 of the housing 110. Fig. 10 is an exploded perspective view showing an example of the display section 150 of the portable terminal device 2 according to this exemplary embodiment. As shown in Fig. 10, the display section 150 includes a display panel 152, a bezel 153 formed so as to surround the periphery of the display panel 152, and a touch panel 151 disposed on the front surface side of the display panel 152. Alternatively, a panel that is formed of glass or plastic and has no touch panel function may be disposed in place of the touch panel 151 on the front surface side of the display panel 152.

The touch panel 151 includes a panel 161, an electrode part 162 disposed on the surface of the panel 161, and wiring 163. In the touch panel 151, a detection signal for detecting a position where a user's finger touch by using a capacitance is very weak. Therefore, the leading part of the wiring 163 of the touch panel 151 is preferably disposed in such a manner that the wiring 163 overlaps the substrate 130 in a direction perpendicular to the main surface (front surface) of the touch panel 151. By arranging the touch panel 151 and the substrate 130 as described above, it is possible to reduce the length of the wiring 163 of the touch panel 151 and thereby to prevent noises from mixing into the detection signal.

The display panel 152 is, for example, a liquid crystal panel, an organic EL panel, or the like. Flexible cables 172 and 174 for supplying an image signal and so on to a display panel main body 171 are connected to ends 173 and 175 of the display panel main body 171. The display panel main body 171 is held by the bezel 153.

The bezel 153 includes a side wall 181 covering the side of the display panel main body 171, and a bottom surface 182 coveting a part of the rear surface of the display panel main body 171. An opening 183 is formed in a part of the bottom surface of the bezel 153 in order to reduce the weight. By providing the bezel 153, it is possible to increase the rigidity of the display panel main body 171 and thus to prevent the display panel main body 171 from deforming. That is, the bezel 153 is provided in order to prevent, when the size of the display panel main body 171 is large, the display panel main body 171 from warping by its own weight. For example, when the size of the display panel main body 171 is about four inches, the warping of the display panel main body 171 by its own weight is small. However, when the size of the display panel main body 171 is seven inches or larger, the warping of the display panel main body 171 by its own weight is large, thus making the bezel 153 indispensable. Further, in order to ensure the strength of the bezel 153, corners of the bezel 153 are left uncut.

The bezel 153 needs to have a certain strength. Therefore, the bezel 153 is preferably formed by using metal material such as stainless steel. Further, the bezel 153 is formed in such a manner that the thickness of parts 184 corresponding to the parts (ends 173 and 175) of the display panel main body 171 to which the flexible cables 172 and 174 are connected is small. In this manner, it is possible to prevent the bezel 153 from interfering with the flexible cables 172 and 175 and thereby to reduce the overall thickness of the display panel 152 and the bezel 153.

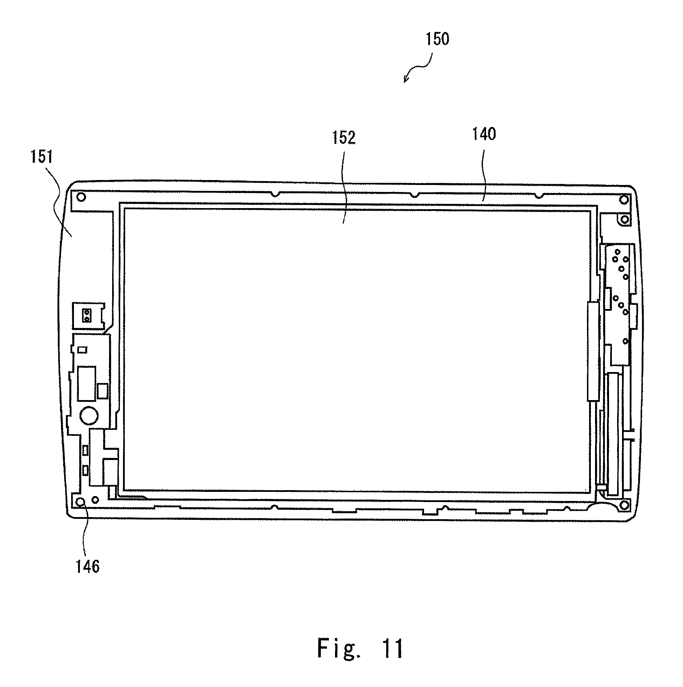

Fig. 11 is a bottom view of the display section 150 of the portable terminal device 2 according to this exemplary embodiment. Fig. 11 is a figure for comparing the sizes of the touch panel 151, the display panel 152, and the frame component 140 (illustration of the bezel 153 is omitted). As shown in Fig. 11, the frame component 140 is disposed inside the touch panel 151 and the display panel 152 is disposed inside the frame component 140. As shown above, since a space is formed between the peripheral part of the touch panel 151 and the display panel 152, the display panel 152 can be protected from external impacts. The size of the touch panel 151 corresponds to the size of the housing 110, and the peripheral part of the touch panel 151 is fixed on the fixing surface 113 formed in the peripheral part of the housing 110.

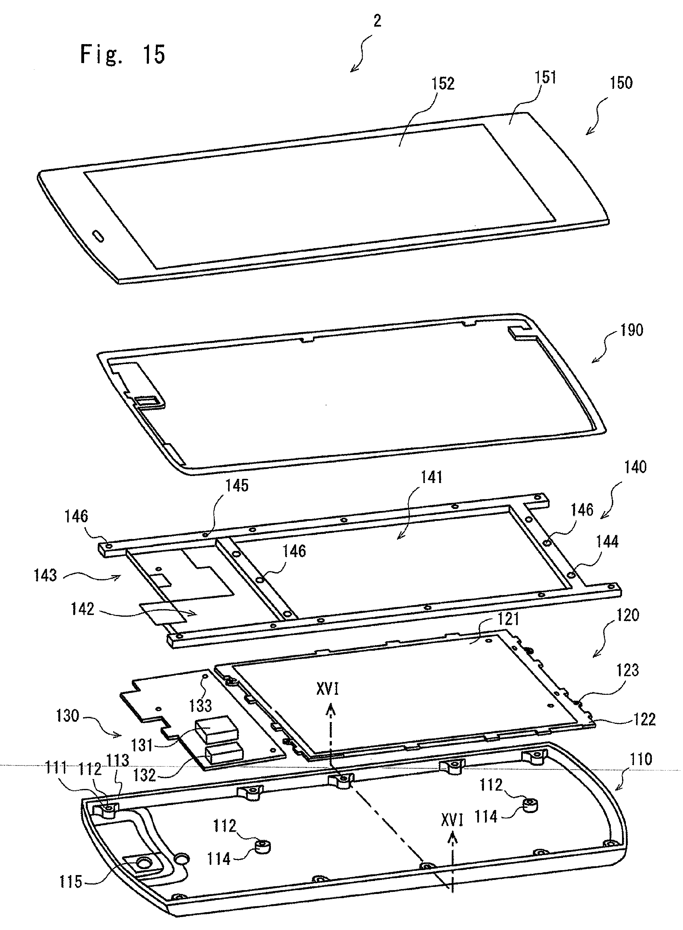

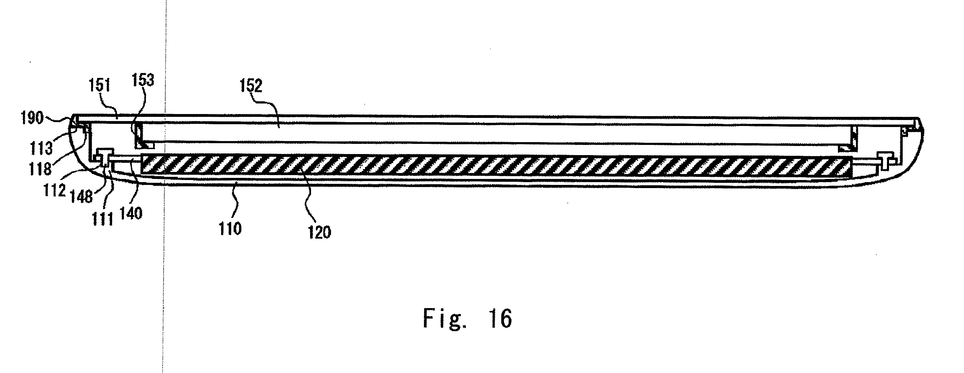

Fig. 15 is an exploded perspective view showing another example of a portable terminal device according to this exemplary embodiment. Fig. 16 is a cross section of the portable terminal device taken along a line XVI-XVI in Fig. 15. In the portable terminal device 2' according to the another example of this exemplary embodiment, a spacer 190 is provided between the fixing surface 113 of the housing 110 and the touch panel 151 for the fixing of the display section 150 to the housing 110. As shown in the exploded perspective view in Fig. 15, the spacer 190 is disposed so as to cover the fixing surface 113 of the housing 110. Note that as shown in the cross section in Fig. 16, the spacer 190 covers the peripheral side surface of the touch panel 151. Further, a step 118 is formed on the fixing surface 113 of the housing 110, so that the touch panel 151 can be prevented from getting misaligned from the housing 110 even when a stress in an in-plane direction is exerted on the touch panel 151. Further, by disposing the spacer 190, the alignment process of the touch panel 151 with the fixing surface 113 of the housing 110 can be easily performed when the touch panel 151 is fixed on the fixing surface 113.

As explained above, the portable terminal device according to this exemplary embodiment includes at least the frame component 140 to which the battery 120 and the substrate 130 are fixed, the housing 110 which contains carbon composite material and to which the frame component 140 is fixed, and the display section 150 fixed on the side of the housing 110 on which the frame component 140 is fixed.

Note that the housing 110 contains carbon composite material that has a strength stronger than that of resin. Further, the frame component 140, to which the battery 120 and the substrate 130 are fixed, is fixed to the housing 110. Therefore, it is possible to suppress the plastic deformation of the frame component 140 owing to the restoring force of the housing 110 having a large strength. Further, the rigidity of the portable terminal device can be ensured owing to the part(s) where the housing 110 and the frame component 140 are joined together. Therefore, it is possible to maintain the strength of the portable terminal device even when the thickness of the housing 110 is reduced. Further, since the battery 120 and the substrate 130 are attached to the housing 110 with the frame component 140 interposed therebetween, impacts that transmits from the housing 110 to the battery 120 and the substrate 130 when the portable terminal device is dropped can be reduced. More specifically, impacts that are exerted on the housing 110 when the portable terminal device is dropped do not directly transmit to the battery 120 and the substrate 130. Instead, the impacts transmit from the housing 110 to the frame component 140 and then from the frame component 140 to the battery 120 and the substrate 130. Therefore, the impacts that transmit to the battery 120 and the substrate 130 can be reduced.

Further, in the portable terminal device according to this exemplary embodiment, as shown in cross sections in Figs. 12 and 16, the display section 150 is fixed on the fixing surface 113 of the housing 110 and the frame component 140 is fixed to the fixing parts 111 of the housing 110. That is, the display section 150 and the frame component 140 are independently fixed to different places of the housing 110. Therefore, it is possible to form a space(s) between the periphery of the bezel 153 and the frame component 140 (see Figs. 12 and 16) and thereby to reduce impacts that transmit from the battery 120, the substrate 130, and the frame component 140 to the display section 150 when the portable terminal device is dropped.

Accordingly, the invention according to this exemplary embodiment can provide a portable terminal device capable of achieving a reduction in the thickness and an improvement in the impact resistance of the portable terminal device.

Although the present invention is explained above with reference to exemplary embodiments, the present invention is not limited to the above-described exemplary embodiments. Various modifications that can be understood by those skilled in the art can be made to the configuration and details of the present invention within the scope of the invention.

This application is based upon and claims the benefit of priority from Japanese patent application No. 2012-006587, filed on January 16, 2012, the disclosure of which is incorporated herein in its entirety by reference.

### Reference Signs List

- 1, 1', 2, 2': PORTABLE TERMINAL DEVICE
- 10: HOUSING
- 11: FIXING PART
- 12: ATTACHING HOLE
- 13: FIXING SURFACE
- 20: BATTERY
- 21: BATTERY MAIN BODY
- 22: FIXING COMPONENT
- 23: ATTACHING HOLE
- 25, 26: CELL
- 28: BEAM
- 30: SUBSTRATE
- 31, 32: CIRCUIT COMPONENT
- 33: ATTACHING HOLE
- 40: FRAME COMPONENT
- 41, 42, 43: OPENING
- 44, 45, 46: ATTACHING HOLE
- 50: DISPLAY SECTION
- 51: TOUCH PANEL
- 52: DISPLAY PANEL
- 53: BEZEL
- 61: PANEL
- 62: ELECTRODE PART
- 63: WIRING
- 71: DISPLAY PANEL MAIN BODY
- 72: FLEXIBLE CABLE
- 73: END
- 81: SIDE WALL
- 82: BOTTOM SURFACE
- 83: OPENING

## Claims

1. A portable terminal device comprising:
a frame component to which a substrate and a battery are fixed;
a housing to which the frame component is fixed; and
a display section fixed on a side of the housing on which the frame component is fixed.

2. The portable terminal device according to Claim 1, wherein the housing contains carbon composite material.

3. The portable terminal device according to Claim 2, wherein the carbon composite material contained in the housing contains carbon fibers, and
the carbon fibers are disposed so that the carbon fibers are oriented in a longitudinal direction of the housing.

4. The portable terminal device according to Claim 3, wherein the carbon fibers are disposed so that some of the carbon fibers are oriented in the longitudinal direction of the housing and other of the carbon fibers are oriented in a direction intersecting the longitudinal direction of the housing, and
an amount of the carbon fibers disposed in the longitudinal direction of the housing is larger than that of the carbon fibers disposed in the direction intersecting the longitudinal direction of the housing.

5. The portable terminal device according to Claim 3 or 4,
wherein
the housing comprises a plurality of carbon fiber layers stacked in a direction perpendicular to a main surface of the housing, and
a direction of carbon fibers of a carbon fiber layer disposed on an outermost side of the housing among the plurality of carbon fiber layers coincides with the longitudinal direction of the housing.

6. The portable terminal device according to any one of Claims 3 to 5, wherein
the housing comprises a plurality of carbon fiber layers stacked in a direction perpendicular to a main surface of the housing, and
a direction of carbon fibers of a carbon fiber layer disposed on an innermost side of the housing among the plurality of carbon fiber layers coincides with the longitudinal direction of the housing.

7. The portable terminal device according to any one of Claims 1 to 6, wherein the frame component includes a first opening in a place opposed to a first surface of the battery.

8. The portable terminal device according to any one of Claims 1 to 7, wherein the frame component includes a second opening in a place corresponding to a circuit component disposed on the substrate.

9. The portable terminal device according to any one of Claims 1 to 8, wherein the substrate and the battery are fixed to the frame component from a side of the frame component on which the housing is disposed.

10. The portable terminal device according to any one of Claims 1 to 9, wherein the housing comprises:
a fixing surface for fixing the display section to the peripheral part of the housing; and
a fixing part for fixing the frame component in a place located on an inner side of the peripheral part and at a height lower than that of the fixing surface.

11. The portable terminal device according to Claim 10, wherein the fixing part is formed so as to protrude inward from the peripheral part.

12. The portable terminal device according to Claim 10 or 11, wherein the display section is fixed on the fixing surface with a spacer interposed therebetween.

13. The portable terminal device according to any one of Claims 1 to 12, wherein the display section comprises:
a display panel;
a bezel formed so as to surround a periphery of the display panel; and
a touch panel disposed on a front surface side of the display panel.

14. The portable terminal device according to Claim 13, wherein the bezel is formed in such a manner that a thickness of a part of the bezel corresponding to a part of the display panel to which a flexible cable is connected is small.

15. The portable terminal device according to Claim 13 or 14, wherein a wiring leading part of the touch panel is disposed so as to overlap the substrate in a direction perpendicular to a main surface of the touch panel.

16. The portable terminal device according to any one of Claims 1 to 15, wherein the battery comprises a plurality of cells each extending in a longitudinal direction of the housing, and the plurality of cells are arranged in a direction perpendicular to the longitudinal direction of the housing.

17. The portable terminal device according to any one of Claims 1 to 16, wherein the housing is formed by using carbon composite material and insulating material, and a part of the housing corresponding to a part where an antenna is disposed is formed by the insulating material.
